# EUROPÄISCHE PATENTSCHRIFT

(11) **EP 1 873 027 B1**
(45) Veröffentlichungstag und Bekanntmachung des Hinweises auf die Patenterteilung: **17.11.2010**
(21) Anmeldenummer: 07033502.1
(22) Anmeldetag: 27.06.2007
(51) Int. Cl.: B60T 7/10

(54) **Handbremseinrichtung**
Hand brake system
Système de frein à main

(30) Priorität: 29.06.2006 AT 10952006
(43) Veröffentlichungstag der Anmeldung: 02.01.2008
(73) Patentinhaber: DGS Druckguss Systeme AG, 9015 St. Gallen (CH)
(72) Erfinder: Pichlbauer, Peter, 9403 Goldach (CH)
(74) Vertreter: Babeluk, Michael

(56) Entgegenhaltungen:
- EP-A1- 1 127 759
- DE-A1- 19 506 592
- DE-U1- 20 017 904
- US-A1- 2004 074 331

## Beschreibung

Die Erfindung betrifft eine Handbremseinrichtung mit einem Bremshebel, der um eine Achse drehbar in einem fahrzeugfesten Halter gelagert ist, wobei der Bremshebel und der Halter aus verschiedenen Werkstoffen bestehen, und wobei der Halter aus Metall besteht, wobei der Halter im Bereich der Achse einen Aufnahmebereich für den Bremshebel aufweist, welcher zumindest auf einer Seite an eine Flanke des Bremshebels grenzt.

Aus der EP 1 273 495 B1 ist ein Handbremshebel für Kraftfahrzeuge bekannt geworden, welcher einteilig und aus Druckguss gefertigt ist. Der Druckgusshebel ist in einem Halter drehbar gelagert, welcher ebenfalls als Druckgussteil ausgeführt ist. Nachteilig ist, dass dies mit einem erhöhten Herstellungs- und Fertigungsaufwand verbunden ist, so dass der Stückpreis für ein aus Handbremshebel und Halter bestehendes Handbremsmodul relativ hoch ist.

Die DE 195 06 592 A1 zeigt eine Parkbremskabel-Betätigungsvorrichtung mit einem Bremshebel, der um eine Achse drehbar in einem fahrzeugfesten Halter gelagert ist, wobei der Bremshebel aus Kunststoff oder Leichtmetallform gegossen ist. Die Betätigungsvorrichtung weist zur Betätigung einen Parkbrems-Fußhebel auf.

Aus der DE 200 17 904 U1 als nächstliegendem Stand der Technik ist ein Handbremshebel für eine Betätigungsvorrichtung zur Betätigung einer Feststellbremse mit einer rohrförmigen Führung bekannt, wobei der Handbremshebel um eine Achse drehbar in einem fahrzeugfesten Halter gelagert ist und wobei die Handbremshebelschalen aus Kunststoffspritzteilen bestehen und die Formteile des Lagerbockes aus in der Herstellung sehr kostenaufwändigen Druckgussteilen bestehen.

Die DE 200 23 468 U1 zeigt eine Handbremseinrichtung mit einem Bremshebel, der um eine Achse drehbar in einem fahrzeugfesten Halter gelagert ist, wobei der Halter von einem einstückig ausgebildeten Kunststoffspritzteil oder einem aus einem aus Leichtmetalllegierung bestehenden Gussteil gebildet ist.

Des weiteren ist aus der DE 692 02 264 T2 eine handbediente Feststellbremse für Kraftfahrzeuge bekannt, welche einen Bremshebel aus Kunststoff aufweist, welcher beidseitig einen Halter umschließt. Über das Material des Halters wird nichts ausgesagt.

Einseitig in einem Halter gelagerte Bremshebel sind aus den Druckschriften EP 1 127 759 A1 und US 2004/0074331 A1 bekannt.

Aufgabe der Erfindung ist es, eine kostengünstigere Lösung für eine Handbremseinrichtung der eingangs genannten Art anzubieten.

Erfindungsgemäß wird dies dadurch erreicht, dass der Halter als Stahlblech und der Aufnahmebereich für den Bremshebel eben ausgebildet ist und dass der Bremshebel als Druckgussteil ausgebildet ist.

In einer sehr robusten Ausführungsvariante der Erfindung ist vorgesehen, dass der Aufnahmebereich des Halters beidseitig von Flanken des Bremshebels umschlossen ist und der Bremshebel über jede Flanke am Halter gelagert ist.

Eine besonders einfache erfindungsgemäße Ausführungsvariante sieht vor, dass der Bremshebel einseitig am Halter gelagert ist.

Der Bremshebel kann aus Leichtmetall bestehen.

Durch die Ausführung des Halters aus Stahlblech kann der Stückpreis für eine Handbremseinrichtung wesentlich verringert werden.

Die Erfindung wird im Folgenden anhand der Figuren näher erläutert. Es zeigen:
- Fig. 1: eine erfindungsgemäße Handbremseinrichtung in einer Schrägan- sicht in einer ersten Ausführungsvariante;
- Fig. 2: die Handbremseinrichtung in einer Seitenansicht;
- Fig. 3: die Handbremseinrichtung in einer Draufsicht;
- Fig. 4: die Handbremseinrichtung in einem Schnitt gemäß der Linie IV-IV in Fig. 2;
- Fig. 5: die Handbremseinrichtung in einem Schnitt gemäß der Linie V-V in Fig. 2;
- Fig. 6: eine erfindungsgemäße Handbremseinrichtung in einer Seitenan- sicht in einer zweiten Ausführungsvariante;
- Fig. 7: die Handbremseinrichtung in einer Draufsicht; und
- Fig. 8: die Handbremseinrichtung in einem Schnitt gemäß der Linie VIII- VIII in Fig. 6.

Funktionsgleiche Teile sind in den Ausführungsvarianten mit gleichen Bezugszeichen versehen.

Die Handbremseinrichtung 1 besteht aus einem Bremshebel 2 und einem Halter 3, welcher fest mit einem Fahrzeug verbunden ist. Der Bremshebel 2 ist um eine Achse 4 drehbar am Halter 3 gelagert. Der Bremshebel 2 ist als Druckgussteil gefertigt und besteht beispielsweise aus Leichtmetall er kann aber auch als Kunststoffteil konzipiert sein.

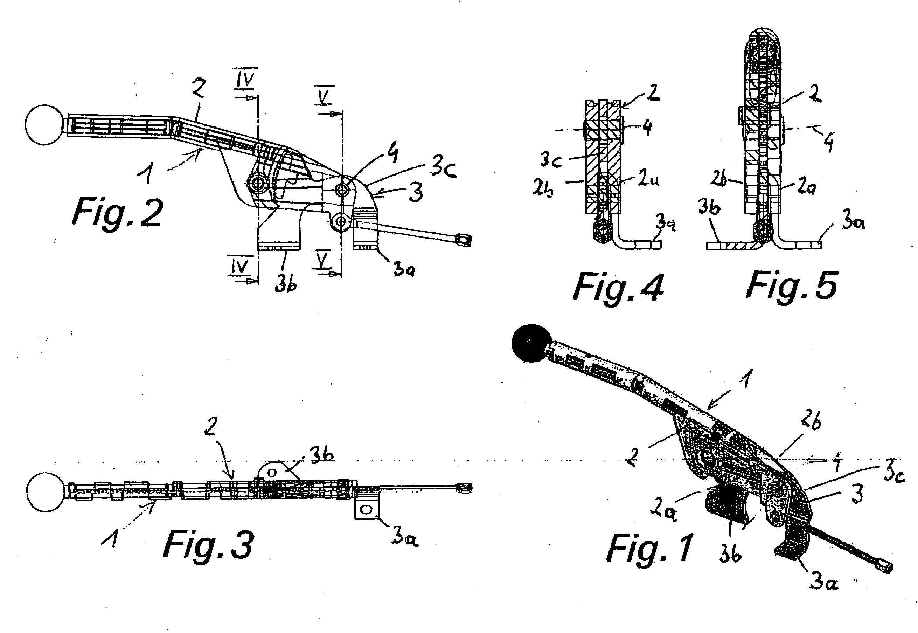

Der Halter 3 ist als einfacher Stahlblechteil ausgebildet. Er weist zwei gebogene Laschen 3a, 3b zur Befestigung am Fahrzeug auf. Im Bereich der Drehachse 4 weist der Halter 3 einen ebenen Aufnahmebereich 3c für den Bremshebel 2 auf, welcher in der in den Fig. 1 bis Fig. 5 gezeigten Ausführung beidseitig von Flanken 2a, 2b des Bremshebels 2 umschlossen wird. Dadurch ist eine symmetrische Lagerung des Bremshebels 2 gewährleistet.

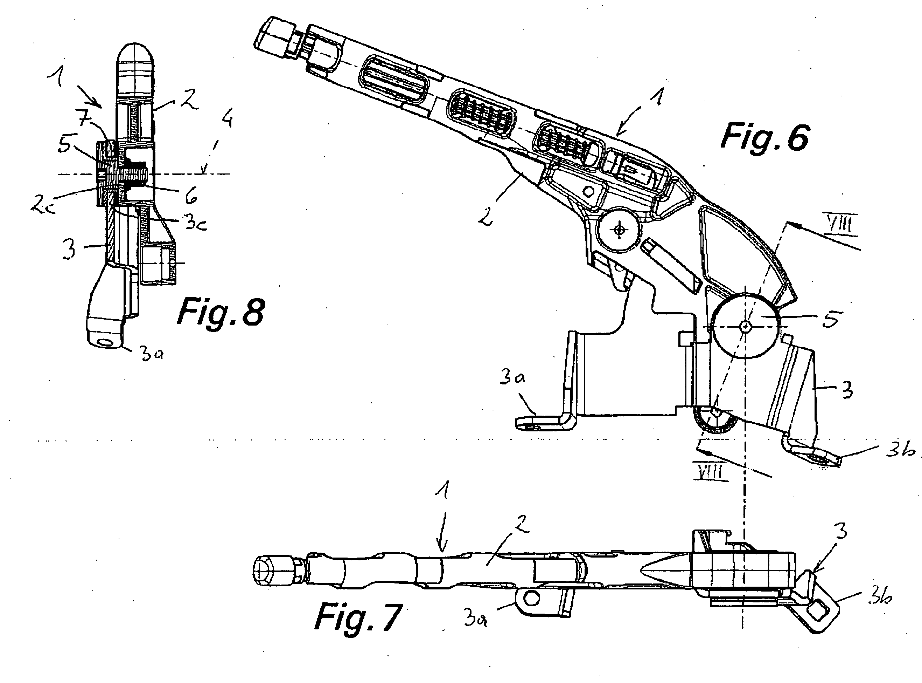

Bei der in den Fig. 6 bis Fig. 8 dargestellten besonders Kostengünstigen Ausführung ist der Bremshebel 2 asymmetrisch gelagert, wobei nur eine Seite des Aufnahmebereiches 3c des Halters 3 an eine Flanke 2c des Bremshebels 2 grenzt. Die Verbindung zwischen Halter 3 und Bremshebel 2 erfolgt über einen Bolzen 5, der über eine Mutter 6 gesichert ist. Zwischen Bolzen 5 und Halter 3 kann eine Lagerhülse 7 angeordnet sein.

Dadurch, dass der Halter 3 als kostengünstig herzustellender Stahlblechteil ausgebildet ist, lässt sich der Fertigungsaufwand und damit der Stückpreis sehr gering halten.

## Patentansprüche

1. Handbremseinrichtung (1) mit einem Bremshebel (2), der um eine Achse (4) drehbar in einem fahrzeugfesten Halter (3) gelagert ist, wobei der Bremshebel (2) und der Halter (3) aus verschiedenen Werkstoffen bestehen, und wobei der Halter (3) aus Metall besteht, wobei der Halter (3) im Bereich der Achse (4) einen Aufnahmebereich (3c) für den Bremshebel (2) aufweist, welcher zumindest auf einer Seite an eine Flanke (2a, 2b; 2c) des Bremshebels grenzt, **dadurch gekennzeichnet, dass** der Halter (3) als Stahlblech und der Aufnahmebereich (3c) für den Bremshebel (2) eben ausgebildet ist und dass der Bremshebel (2) als Druckgussteil ausgebildet ist.

2. Handbremseinrichtung (1) nach Anspruch 1, **dadurch gekennzeichnet, dass** der Bremshebel (2) aus Leichtmetall besteht.

3. Handbremseinrichtung (1) nach Anspruch 1 oder 2, **dadurch gekennzeichnet, dass** der Aufnahmebereich (3c) des Halters (5) beidseitig von Flanken (2a, 2b) des Bremshebels (2) umschlossen ist und der Bremshebel über jede Flanke (2a, 2b) am Halter (3) gelagert ist.

4. Handbremseinrichtung (1) nach Anspruch 1 oder 2, **dadurch gekennzeichnet, dass** der Bremshebel (2) einseitig am Halter (3) gelagert ist.

## Claims

1. Handbrake assembly (1) with a brake lever (2), which rotates about an axle (4) and is borne by a holding bracket (3) fastened in the vehicle, where the brake lever (2) and the bracket (3) are made of different materials, the bracket (3) being made of metal with a receiving area (3c) for the brake lever (2) in the area of the axle (4), which receiving area (3c) is at least on one side adjacent to a flank (2a, 2b; 2c) of the brake lever (2), **characterised in that** the bracket (3) is made of sheet steel and the receiving area (3c) for the brake lever (2) is plane and the brake lever (2) is a die-cast part.

2. Handbrake assembly (1) according to claim 1, **characterised in that** the brake lever (2) is made of light metal.

3. Handbrake assembly (1) according to claim 1 or 2, **characterised in that** the receiving area (3c) of the bracket (3) is enclosed by flanks (2a, 2b) of the brake lever (2) on both sides, and that the brake lever (2) is borne on the bracket (3) via each flank (2a, 2b).

4. Handbrake assembly (1) according to claim 1 or 2, **characterised in that** the brake lever (2) is borne on the bracket (3) on one side.

## Revendications

1. Dispositif de frein à main (1) comportant un levier de frein (2) monté pivotant autour d'un axe (4) dans un support (3) solidaire du véhicule,
- le levier de frein (2) et le support (3) étant dans des matériaux différents et
- le support (3) est en métal,
- dans la zone de l'axe (4) le support (3) comporte une zone de réception (3c) pour le levier de frein (2) délimité au moins d'un côté par un flanc (2a, 2b, 2c) du levier de frein,
**caractérisé en ce que**
le support (3) est en tôle d'acier et la zone de réception (3c) du levier de frein (2) est réalisée de même et le levier de frein (2) est une pièce injectée sous pression.

2. Dispositif de frein à main (1) selon la revendication 1,
**caractérisé en ce que**
le levier de frein (2) est en métal léger

3. Dispositif de frein à main (1) selon les revendications 1 ou 2,
**caractérisé en ce que**
la zone de réception (3c) du support (5) est entourée des deux côtés par les flancs (2a, 2b) du levier de frein (2) et le levier de frein est monté sur le support (3) par chacun des flancs (2a, 2b).

4. Dispositif de frein à main (1) selon les revendications 1 ou 2,
**caractérisé en ce que**
le levier de frein (2) est monté d'un côté sur le support (3).
